# EUROPÄISCHE PATENTSCHRIFT

(11) **EP 3 765 244 B1**
(45) Veröffentlichungstag und Bekanntmachung des Hinweises auf die Patenterteilung: **08.10.2025**
(21) Anmeldenummer: 19708987.3
(22) Anmeldetag: 27.02.2019
(51) Int. Cl.: B25J 9/08, B25J 9/10

(54) **GELENK MIT MULTIFUNKTIONSPROFIL FÜR EINEN MANIPULATOR**
JOINT WITH MULTI-FUNCTIONAL PROFILE FOR A MANIPULATOR
ARTICULATION AVEC PROFILÉ MULTIFONCTIONNEL POUR MANIPULATEUR

(30) Priorität: 15.03.2018 DE 202018101463 U
(43) Veröffentlichungstag der Anmeldung: 20.01.2021
(73) Patentinhaber: Igus GmbH, 51147 Köln (DE)
(72) Erfinder: RAAK, Martin, 50968 Köln (DE); BERGER, Felix, 50679 Köln (DE)
(74) Vertreter: Lippert Stachow Patentanwälte Rechtsanwälte
(86) Internationale Anmeldenummer: PCT/EP2019/054794
(87) Internationale Veröffentlichungsnummer: WO 2019/174912

(56) Entgegenhaltungen:
- EP-A1- 1 617 087
- WO-A1-2018/040541
- DE-U1- 202016 101 255

## Beschreibung

Die Erfindung betrifft ein Gelenk mit einem Multifunktionsprofil für einen Manipulator, wobei das Multifunktionsprofil als tragendes Verbindungselement zwischen einem Motor des Manipulators und dem Gelenk ausgebildet ist.

Ein Manipulator ist aus DE 20 2014 101 342 U1 bekannt, bei dem ein Verbindungselement als Hohlprofilabschnitt ausgebildet ist, das jedoch kaum Variationsmöglichkeiten hinsichtlich unterschiedlicher Ausbildungsformen des Manipulators zulässt.

Die DE 20 2016 101 255 U1 offenbart einen Manipulator mit mehreren hinsichtlich ihrer Profilausbildung zumindest abschnittsweise baugleichen Multifunktionsprofilen als tragende Verbindungselemente zwischen zwei Gelenken des Manipulators und einem Gelenk des Manipulators und einem dem Gelenk zugehörigen Motor, wobei die Multifunktionsprofile eine rechteckige Außenkontur, eine erste Aufnahmenut, eine zweite Aufnahmenut und einen Innenkanal aufweisen, wobei die Aufnahmenuten sich seitlich in Längsrichtung des Multifunktionsprofils erstrecken und quer zur Längsrichtung nach außen geöffnet sind und die Gelenke jeweils ein um eine Getriebeachse drehbares Getrieberad und ein weiteres Getriebeelement aufweisen, wobei das Getrieberad und das weitere Getriebeelement ein Getriebe bilden.

Bei einer Ausführung eines aus dem vorgenannten Dokument bekannten Gelenks ist das Getriebe als Schneckenradgetriebe mit abtriebsseitigem Schneckenrad als Getrieberad und antriebsseitiger Schnecke als weiterem Getriebeelement ausgebildet, wobei das Getrieberad in einem Gehäuse des Gelenks und die Schnecke in einem Aufnahmeteil des Gehäuses angeordnet sind und die Schnecke verdrehfest auf einer im Innenkanal des dem Gelenk zugehörigen Multifunktionsprofils geführten Antriebswelle angeordnet ist und das Multifunktionsprofil verdrehfest und verschiebungsfest durch die erste Aufnahmenut am Gehäuse festgelegt ist.

Bei einer anderen Ausführung eines aus dem vorgenannten Dokument bekannten Gelenks ist das Getriebe als Lineargetriebe ausgebildet mit einem Zahnrad als Getrieberad und einem Zahnstangenelement als weiterem Getriebeelement, das in der in Einbaulage zu dem Zahnrad hin offenen ersten Aufnahmenut des zugehörigen Multifunktionsprofils lageunveränderlich festgelegt ist. Das als Zahnrad ausgebildete Getrieberad ist außerhalb des das Gelenk aufnehmenden Gehäuses in Verlängerung der Antriebswelle eines Motors angeordnet. Das als Zahnstangenelement ausgebildete weitere Getriebeelement ist ebenfalls außerhalb des das Gelenk aufnehmenden Gehäuses sich über eine Stirnseite desselben erstreckend angeordnet.

Aus der WO2018/040541A1 ist ein Manipulator mit mehreren Profilen als tragende Verbindungselemente zwischen zwei Gelenken des Manipulators und einem Gelenk des Manipulators und einem Motor bekannt, wobei die Profile hinsichtlich ihrer Profilausbildung zumindest abschnittsweise baugleich sind, sich seitlich in Längsrichtung erstreckende und quer zur Längsrichtung nach außen geöffnete Aufnahmenuten und einen Innenkanal aufweisen und mindestens eines der Profile als Welle ausgebildet ist, und die beiden Gelenke oder das eine Gelenk jeweils ein um eine Getriebeachse drehbares und in einem Gehäuse des Gelenks angeordnetes Getrieberad und ein in einem Aufnahmeteil des Gehäuses angeordnetes weiteres Getriebeelement aufweisen, wobei das Getrieberad und das weitere Getriebeelement ein Getriebe bilden.

Aus der EP 1 617 087 A1 ist einen Manipulator mit mehreren Multifunktionsprofilen als Tragelementen bekannt, wobei die Multifunktionsprofile eine kreisrunde Außenkontur, mehrere sich seitlich in Längsrichtung der Multifunktionsprofile erstreckende und quer zur Längsrichtung nach außen geöffnete Aufnahmenuten aufweisen und wobei mindestens eines der Multifunktionsprofile als Welle ausgebildet ist.

Eine Aufgabe der Erfindung ist, eine Baugruppe aus einem Gelenk mit einem Multifunktionsprofil für einen Manipulator bereitzustellen, die einfach aufgebaut und vielfache Gestaltungsmöglichkeiten eröffnet.

Die gestellte Aufgabe wird erfindungsgemäß durch die Merkmale des Anspruchs 1 gelöst. Vorteilhafte Weiterbildungen werden in den Unteransprüchen beschrieben.

Durch den Einsatz des Multifunktionsprofils können einerseits, wie weiter unten detaillierter beschrieben, auf einfache Weise unterschiedliche Ausbildungsformen des Manipulators entwickelt werden, die kostengünstig jeweils an bestimmte Aufgaben angepasst sein können. Andererseits, Konstruktion und Montage vereinfachend, können zwei Multifunktionsprofile verwendet werden, die hinsichtlich ihrer Profilausbildung zumindest abschnittsweise baugleich ausgebildet sein können. Diese Baugleichheit der Profilausbildung ist nicht auf die absoluten Größen der beiden Multifunktionsprofile, sondern allgemein auf die Querschnittsform bzw. Querschnittskontur bezogen. Baugleichheit meint, dass die beiden Multifunktionsprofile bezüglich ihrer Querschnitte zumindest ähnlich, vorzugsweise identisch sind. Sie können aber auch kongruent, das heißt deckungsgleich ausgebildet sein. Zudem ist das Multifunktionsprofil auch zwischen Motor und Gelenk vorgesehen, wodurch eine Wärmebeeinflussung des Gelenks zumindest minimiert wird. Ferner kann der Motor ein Gegengewicht zu dem Gelenk bilden. Zudem kann der Motor beliebiger Bauart sein und nur der Bedingung genügen, dass er für die jeweilige Anwendung geeignet ist. Vorteilhaft unter anderem wegen der geringeren notwendigen Anzahl an Leitungen kann als Motor ein bürstenloser Gleichstrommotor eingesetzt werden.

Das Multifunktionsprofil weist eine zumindest in seiner Grundform kreisrunde Außenkontur auf. Dieses zumindest in seiner Grundform kreisrunde Außenprofil des Multifunktionsprofils ermöglicht es, dass Multifunktionsprofil auf einfache Weise drehbar zu lagern, um es beispielsweise zur Drehmomentübertragung einzusetzen. Ferner kann, wenn erforderlich, auf eine einfache Weise, wie mittels Klemmsitz, beispielsweise als weiteres Getriebeelement ein Zahnradelement, wie Stirnrad, über das zumindest in seiner Grundform kreisrunde Außenprofil gebracht werden. Die vielfältige Einsatzmöglichkeit des Multifunktionsprofils wird auch dadurch deutlich, dass es neben seinem Einsatz als tragendes und versteifendes Verbindungselement auch als Zahnstange ausgebildet werden kann.

Die seitlichen Aufnahmenuten sind quer zur Längsrichtung des Multifunktionsprofils nach außen hin geöffnet ausgebildet. Dadurch sind sie von außen zugänglich, was insbesondere die Montage und Demontage erleichtert.

In einer weiteren Ausbildungsform können die seitlichen Aufnahmenuten umfänglich beabstandet angeordnet sein. Diese Beabstandung kann umfänglich zumindest im Wesentlichen gleich sein. Es können auf dem Multifunktionsprofil umfänglich benachbarte Außennuten, ausgehend von ihrer umfänglichen Mitte als Bezugspunkt, umfänglich zumindest im Wesentlichen gleich beabstandet angeordnet sein. Die Außennuten können entsprechend ihrem zugedachten Verwendungszweck unterschiedlich ausgebildet sein.

Beispielsweise können eine als erste Aufnahmenut ausgebildete Aufnahmenut zur Festlegung des Multifunktionsprofils an dem Gehäuse und/oder zur Festlegung von Zusatzbauteilen, eine als zweite Aufnahmenut ausgebildete Aufnahmenut zur Positionierung des weiteren Getriebeelements relativ zum Gehäuse und/oder zum Getrieberad und/oder eine als dritte Aufnahmenut ausgebildete Aufnahmenut für ein Messelement vorgesehen sein.

Beispielsweise zur Festlegung des Multifunktionsprofils an dem Gehäuse oder zur Festlegung von weiteren Vorrichtungen an dem Multifunktionsprofil können die zweite Aufnahmenut und/oder die dritte Aufnahmenut hinterschnitten ausgebildet sein. Insbesondere können zwei erste Aufnahmenuten vorgesehen sein, deren Querschnittsprofile bevorzugt zueinander kongruent ausgebildet sind. Insbesondere kann die erste Aufnahmenut bezüglich einer Längsrichtung des Multifunktionsprofils diametral zur zweiten Aufnahmenut angeordnet sein.

Die Aufnahmenuten können umfänglich gleich beabstandet zueinander angeordnet sein. Sind zwei erste Aufnahmenuten, also insgesamt vier Aufnahmenuten, vorgesehen, so können die Aufnahmenuten bezüglich der Längsachse kreuzförmig zueinander angeordnet sein. Insbesondere können, jeweils bezüglich der Längsachse, und die dritte Aufnahmenut diametral zur vierten Aufnahmenut angeordnet sein.

In einer vorteilhaften Weiterbildung kann der Innenkanal des Multifunktionsprofils einen im Wesentlichen kreisrunden Querschnitt aufweisen. Dies ermöglicht einen kraft- mechanisch günstigen Durchgriff einer Welle mit kreisrundem Querschnitt, wobei die Welle in dem Kanal geschützt ist. Ferner kann der Durchmesser der Welle geringer als der Durchmesser des Innenkanals sein, so dass die Welle in einem bestimmten Abstand, vorzugsweise in der Größe eines Schlupfs, angeordnet, sich frei in dem in Kanal drehen kann.

Der Innenkanal kann ferner zumindest eine seitliche Längskammer zur Aufnahme von Schmiermittel, zur Durchführung von Leitung und/oder zur Materialersparnis aufweisen.

In einer weiteren Ausführungsform kann antriebsseitig und antriebseitig des Gelenks jeweils ein Multifunktionsprofil funktionswirksam mit dem Gelenk verbunden sein. Dies bedeutet, dass diese beiden Multifunktionsprofile bei einem Gelenk unterschiedliche Funktionen ausüben können.

In einer Weiterbildung des Manipulators können die Gelenke jeweils einen motorischen Antrieb mit Motor und Getriebe aufweisen. Das Getriebe umfasst ein um eine Getriebedrehachse drehbares Getrieberad und ein weiteres Getriebeelement. Das Getrieberad kann in einer Wirkverbindung mit einem weiteren Getriebeelement stehen, indem beispielsweise das weitere Getriebeelement an der Peripherie des Getrieberats angreift. Das Getriebe kann für das weitere Getriebeelement eine zur Getriebedrehachse beabstandete Wirkachse aufweisen, über die das weitere Getriebeelement in oder an dem Gehäuses gelagert angeordnet ist.

Ein Multifunktionsprofil kann in der Getriebedrehachse angeordnet sein. Ferner kann ein Multifunktionsprofil in der Wirkachse des jeweils zugeordneten Gelenks angeordnet sein. Insbesondere kann das Multifunktionsprofil stirnseitig an dem Getrieberad angreifen. Alternativ oder zusätzlich kann ein Multifunktionsprofil bezüglich der Wirkachse tangential oder stirnseitig zu dem weiteren Getriebeteil angeordnet sein.

Erfindungsgemäß ist das Getriebe als Schneckengetriebe ausgebildet. Hierzu ist das weitere Getriebeelement als Schnecke und die Wirkachse als Antriebswelle für die Schnecke ausgebildet. Die Antriebswelle kann eine mit dem Antriebsende gekoppelte axiale Verlängerung der Motorwelle bilden. Die Schnecke ist verdrehfest auf der Wirkachse angeordnet. Ferner ist die Wirkachse axial beidstirnseitig der Schnecke an dem Aufnahmeteil drehbeweglich gelagert. Die Antriebswelle ist in dem Multifunktionsprofil geführt angeordnet. Das Hohlprofil kann im Falle des Schneckenantriebs verdrehfest und verschiebungsfest zum Gehäuse an und/oder in demselben angeordnet sein. Hierzu können vom Gehäuse aus entsprechende Vorsprünge in die erste Aufnahmenut bzw. die ersten Aufnahmenuten eingreifen, wobei deren Profil vorteilhaft dem Hinterschnitt der jeweils zugeordneten Aufnahmenut angepasst ist. Zur Herstellung einer verbesserten axialen Verschiebungsfestigkeit der Schnecke auf der Antriebswelle ist das Multifunktionsprofil im Bereich der Schnecke in zwei Abschnitte geteilt, wobei die Abschnitte jeweils mit einem der Schnecke zugewandten Ende insbesondere über eine vorgesehene Lagerung der Antriebswelle stirnseitig gegen die Schnecke geführt angeordnet sind. Die beiden Abschnitte sind über die axiale Erstreckung von Schnecke und Antriebswellenlagerung voneinander beabstandet angeordnet.

In einem nicht beanspruchten Beispiel ist das Getriebe als invertiertes Schneckengetriebe mit antriebsseitigen Getrieberad und abtriebsseitigen weiteren Getriebeelement ausgebildet. Insbesondere ist vorgesehen, dass das Multifunktionsprofil die Wirkachse bildet. Das Schneckenrad ist verdrehfest auf dem Hohlprofil angeordnet. Das Hohlprofil seinerseits ist drehbeweglich an oder in dem Aufnahmeteil des Gehäuses gelagert. Hieraus ergibt sich die Möglichkeit, dass zusätzlich zu dem Multifunktionsprofil als Antriebswelle für das weitere Getriebeelement eine weitere in dem Kanal durchgeführte Antriebswelle vorgesehen ist. Die Antriebswelle kann, ohne ein Drehmoment an das Hohlprofil zu übertragen, durch das Hohlprofil an dem oder durch das Gelenk vorbei geführt werden, um beispielsweise ein Drehmoment in ein benachbartes Gelenk einzukoppeln. Das Getrieberad kann ein umfängliches Außengewinde und das weitere Gewindebauteil eine dem Außengewinde angepasste Stirnverzahnung aufweisen. Das Multifunktionsprofil kann in Verlängerung der Motorachse angeordnet sein. Es kann stirnseitig über eine Kupplung mit der Motorachse drehfest verbunden sein.

In einem nicht beanspruchten Beispiel ist das Getriebe als Lineargetriebe ausgebildet. Das Getrieberad ist als Zahnrad und das weitere Getriebeelement als Zahnstangenelement ausgebildet. Das Zahnstangenelement bildet zugleich die Wirkachse und kann linear verschieblich an dem Aufnahmeteil angeordnet sein. Das Zahnstangenelement ist in der in Einbaulage zu dem Getrieberad hin offenen zweiten Aufnahmenut des Hohlprofils festgelegt. Vorzugsweise ist das Linearelement lageunveränderlich in der Aufnahmenut angeordnet. Vorzugsweise ist die zweite Aufnahmenut an einer zur Wirkachse diametral gegenüberliegenden Außenseite des Hohlprofils angeordnet.

Unter weiterer Mehrung der Variationsmöglichkeiten kann vorgesehen sein, dass das Gelenk insgesamt und/oder die Getriebebauteile jeweils modular aufgebaut sind. Ferner kann der Manipulator modular aufgebaut sein. Demgemäß kann der Manipulator insbesondere in seinen Bauteilen, wie Gelenk, Getriebe, Multifunktionsprofil und Motor, dank des modularen Aufbaus gemäß einem Baukastenprinzip einfach und variationsreich montiert werden.

Weitere Einzelheiten und Vorteile der Erfindung werden im Folgenden, ohne Einschränkung des Schutzumfangs, durch die Beschreibung einer bevorzugten Ausführungsform unter Bezugnahme auf die beigefügten Zeichnungen ersichtlich. Hierbei zeigen:
- Figuren 1A-1C: jeweils eine Ansicht einer Ausführungsform eines erfindungsgemäßen Gelenks mit Multifunktionsprofil als Teil eines Manipulators mit Gelenken,
- **Fig.** 2: eine Längsschnittansicht eines Beispiels eines Manipulators mit einem anderen, nicht beanspruchten Gelenk,
- Fig. 3A-3B: jeweils in einer Seitenansicht zusammenwirkende Getriebeteile für das Gelenk gemäß Figur **2****,**
- Fig. 4A-4B: jeweils eine Längsschnittansicht eines weiteren Beispiels eines Manipulators mit einem anderen, nicht beanspruchten Gelenk,
- Fig. 5A-5B: jeweils eine Ansicht eines Multifunktionsprofils für den Manipulator,
- Fig. 6: eine perspektivische Ansicht des Multifunktionsprofils mit zusätzlicher Anordnung eines Messelements,
- Fig. 7: eine perspektivische Ansicht eines Zahnprofilabschnitts zur Anordnung an das Multifunktionsprofil,
- Fig. 8: eine perspektivische Ansicht einer Sensoranordnung zur Anordnung an das Multifunktionsprofil
- Fig. 9: eine Längsschnittansicht eines Beispiels eines Manipulators mit drei miteinander gekoppelten Gelenken,
- Fig. 10A-10B: jeweils eine Ansicht eines weiteren Beispiels des Manipulators mit drei miteinander gekoppelten Gelenken,
- Fig.11: eine Seitenansicht eines weiteren Beispiels des Manipulators mit sechs miteinander gekoppelten Gelenken und
- Fig. 12A-12B: jeweils eine Ansicht eines weiteren Beispiels des Manipulators mit fünf bzw. 6 miteinander gekoppelten Gelenken.

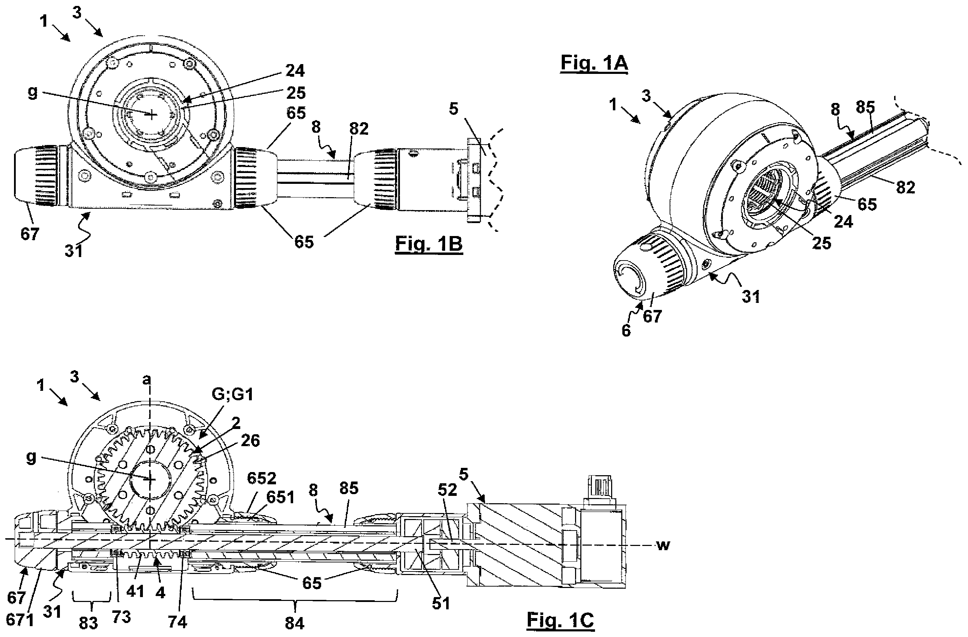

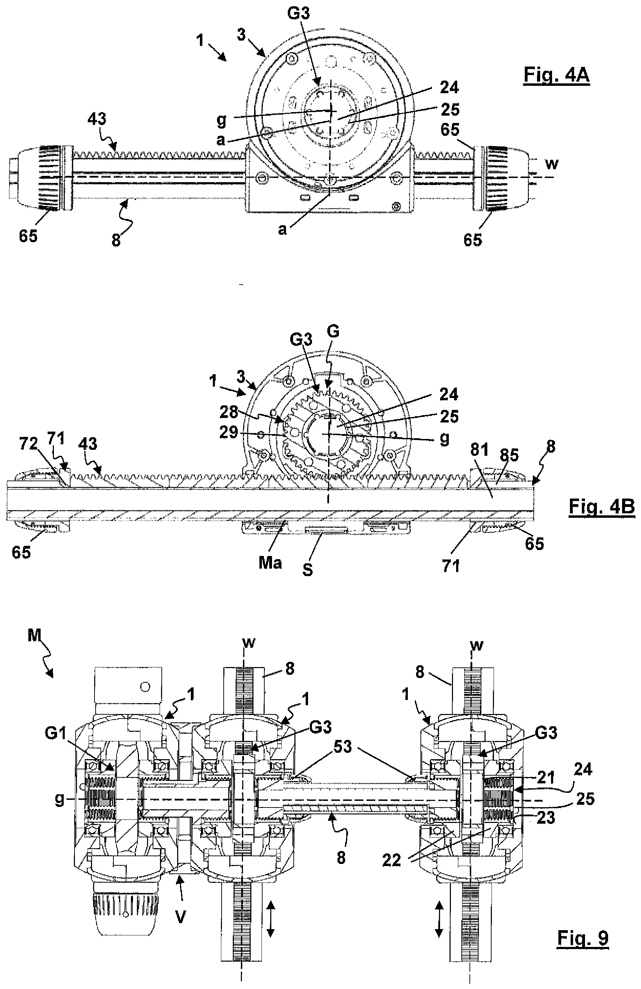

In den Figuren 1-12 werden in verschiedenen Ansichten, Schnittansichten und Einzeldarstellungen jeweils Beispiele eines Manipulators M mit Gelenken 1 gezeigt. Wie insbesondere den Figuren 1C und 9 entnehmbar, weisen die Gelenke 1 jeweils ein um eine Getriebedrehachse g drehbares Getrieberad 2 auf. Wie insbesondere Figur 9 entnehmbar, ist das Getrieberad 2 beidseitig über Adapter 22 in Lagern 7 in einem Gehäuse 3 des Gelenks 1 drehbar gelagert. Die beiden Adapter 22 weisen jeweils an ihrer von der Stirnseite 21 des Getrieberades 2 abgewandten Seite 23 eine bezüglich der Getriebedrehachse g zentrale Öffnung 24 mit Innengewinde 25 auf. Das Gehäuse 3 weist ein Aufnahmeteil 31 zur Aufnahme eines weiteren Getriebeelementes 4 auf.

Das weitere Getriebeelement 4 ist quer, hier senkrecht zur Getriebedrehachse g auf einer Wirkachse w angeordnet. Die Wirkachse w ist in Abstandsrichtung a beabstandet zu der Getriebedrehachse g positioniert. Getriebedrehachse g, Abstandsrichtung a und Wirkachse w sind senkrecht zueinander angeordnet. Das Getriebeelement 4 steht mit der Peripherie des Getrieberades 2 in einer Wirkverbindung. Getrieberad 2 und weiteres Getriebeelement 4 bilden ein Getriebe G zur Übersetzung eines in das Gelenk 1 eingekoppelten Motordrehmoments. Der Motor 5 ist beabstandet zu dem jeweils zugeordneten Gelenk 1 angeordnet.

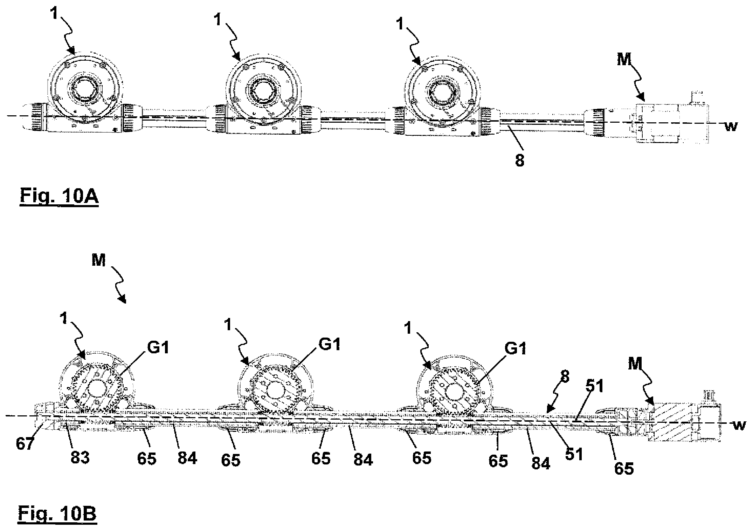

Gemäß den Figuren 1 und 10 ist das Getriebe G des Gelenks 1 als Schneckengetriebe G1 mit einem als Schneckenrad 26 ausgebildeten abtriebsseitigen Getrieberad 2 und einem als Schnecke 41 ausgebildeten antriebsseitigen weiteren Getriebeelement 4 konfiguriert. Die Wirkachse w ist hier eine von einem Motor 5 direkt angetriebene Antriebswelle 51. Die Schnecke 41 ist in einem Klemmsitz auf der Antriebswelle 51 angeordnet. Die Antriebswelle 51 ist, wie Figur 1C entnehmbar, geschützt in einem mittigen Innenkanal 81 eines Multifunktionsprofils 8 geführt angeordnet. Der Innenkanal 81 weist bezüglich seiner Grundform einen im Wesentlichen kreisrunden Querschnitt auf. Seitlich in den Innenkanal 81 einmündend, sind hier zwei zum Innenkanal 81 seitliche Längskammern 87 beispielsweise zur Aufnahme von Schmiermittel, zur Durchführung von Leitung und/oder zur Materialersparnis vorgesehen. Die Längskammern 87 erstrecken sich über die gesamte Länge des Multifunktionsprofils 8. Bezüglich ihres Querschnitts erweitern die Längskammer 87 den Innenkanal 81. Sie sind bezüglich einer Verbindungslinie zwischen zweiter 85 und dritter Aufnahmenut 86 spiegelsymmetrisch angeordnet und ausgebildet.

Das Multifunktionsprofil 8 ist fest mit dem Aufnahmeteil verbunden. Das Multifunktionsprofil 8 ist als tragendes Verbindungselement zwischen Gelenke 1 und Motor 5 angeordnet. Das Hohlprofil 8 dient in dieser Ausführungsform des Gelenks 1 als Schutz, Führung und Verstärkung, insbesondere als Verstärkung hinsichtlich einer Verwendungssteifigkeit, des Abschnittes des Manipulators M zwischen Motor 5 und Gelenk 1. Die Antriebswelle 51 ist ferner bezüglich der Wirkachse w axial beidseitig der Schnecke 41 jeweils über ein Lager 7 an dem Aufnahmeteil 31 drehbar gelagert.

Das Hohlprofil 8 selbst ist verdrehfest und verschiebungsfest zu dem Aufnahmeteil 31 angeordnet. Hierzu sind an beiden Seiten 23 des Hohlprofils 8 hinterschnittene erste Aufnahmenuten 82 vorgesehen, in die an dem Aufnahmeteil 31 vorgesehene Ankervorsprünge zur verdrehfesten Lagerung des Hohlprofils 8 eingreifen.

Das Hohlprofil 8 weist für den Eingriff des Schneckenrades 26 in die Schnecke 41 zwei Abschnitte, d.h. einen ersten Abschnitt 83 und einen zweiten Abschnitt 84, auf. Die beiden Abschnitte 83;84 sind über die bezüglich der Wirkachse w axiale Erstreckung der Antriebswelle 51 an dem Hohlprofil 8 anlagernden beiden Lager 7 und die axiale Erstreckung der Schnecke 41 voneinander beabstandet angeordnet. Die beiden Abschnitte 83;84 greifen jeweils mit einem der Schnecke 41 zugewandten Ende stirnseitig an dem ihnen zugeordneten Lager 7, das heißt, jeweils bezüglich der Richtung von dem Justiergerät zu der Schnecke 41 hin, einem vorderen Lager 73 und einem hinteren Lager 74 an, wobei sie jeweils mit ihrem der Schnecke 41 abgewandten anderen Ende an dem Aufnahmeteil 31 widergelagert sind.

Der zweite Abschnitt 84, in Figur 1C rechts angeordnet, ist über ein Klemmelement 65 widergelagert. Dieses liegt in Arbeitsposition umfänglich hier unter Reibschluss radial außen an dem zweiten Abschnitt 84 an. Das Klemmelement 65 ist ferner verschraubbar an dem Aufnahmeteil 31 angeordnet. Das Klemmelement 65 ist so ausgelegt, dass es mit fortschreitender Verschraubung an dem Aufnahmeteil 31 umfänglich eine entsprechend wachsende radiale Reibkraft auf den zweiten Abschnitt 84 ausübt, die in dieser Anwendung einen Reibschluss mit dem zweiten Abschnitt 84 bewirkt. Das Multifunktionsprofil 8 dient somit hier als Träger für die Klemmelemente 65 und zur Festlegung derselben.

Der erste Abschnitt 83, in Figur 1C links angeordnet, liegt mit seinem widergelagerten Ende stirnseitig kraftübertragungswirksam an einem Justiergerät 67 zur Einstellung einer bezüglich der Wirkachse axialen Spieleinstellung der Wirkverbindung zwischen Schneckenrad 26 und Schnecke 41 an. Das Justiergerät 67 weist eine Stellvorrichtung 671 auf, über die zur Spieleinstellung der erste Abschnitt 83 des Hohlprofils 8 axial in Richtung von dem Justiergerät 67 zu der Schnecke 41 hin gegen das vordere Lager 73 gedrückt wird, welche wiederum gegen die Schnecke 41 bis zur Spielfreiheit hin gedrückt werden kann. Damit wird das Multifunktionsprofil 8 in einer weiteren Funktion zugleich als Teil des Justiergeräts 67 eingesetzt.

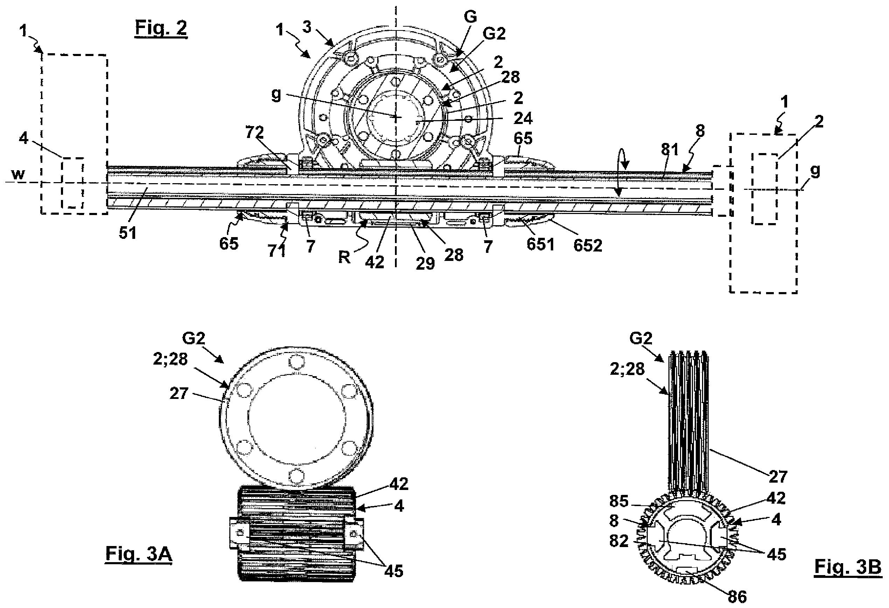

Figur 2 zeigt in einer zur Getriebedrehachse g Querschnittsansicht ein Gelenk 1 als Teil des Manipulators M. Das Getriebe G ist hier als invertiertes Schneckengetriebe G2 ausgebildet. In Umkehrung zu dem Schneckengetriebe G1, wird hier das Drehmoment antriebseitig über das Getrieberad 2 eingekoppelt und über das weitere Getriebeelement 4 abtriebsseitig an die Wirkachse w weitergegeben ausgekoppelt. Wie den Figuren 3A-3B entnehmbar, weisen entsprechend der Umkehrung das Getrieberad 2 ein umfängliches Außengewinde 27 und das weitere Getriebeteil 4 eine Stirnverzahnung 42 auf. Das damit abtriebsseitige Multifunktionsprofil 8 bildet die Wirkachse w. Das Stirnrad 28 ist fest auf dem Hohlprofil 8 angeordnet. Hierzu sind an dem Stirnrad 28 des weiteren Getriebeteil 4 Ankerelemente 45 vorgesehen, über die es unter Reibschluss und/oder Formschluss in die hinterschnittene ersten Aufnahmenuten 82 des Multifunktionsprofils 8 eingreifen. Somit dient das Multifunktionsprofil 8 hier als Träger für das zweite Getriebeelement 4. Da das weitere Getriebeelement 4 drehfest auf dem Multifunktionsprofil 8 gelagert ist, wird das Multifunktionsprofil 8, in Erweiterung seiner Einsatzmöglichkeiten, zur Welle, indem es das Drehmoment des weiteren Getriebeelements 4 aufnimmt und überträgt. Das Multifunktionsprofil 8 ist hier über zwei axial voneinander beabstandete Klemmelemente 65 drehbar an dem Gehäuse 3 gelagert. Das Multifunktionsprofil 8 weist zu seiner drehbaren Lagerung ein in seiner Grundform kreisrundes Außenprofil auf. Schematisch in Figur 2 angedeutet ist die Möglichkeit, das Multifunktionsprofil 8 endseitig Drehmoment übertragungswirksam beispielsweise an zwei Gelenke 1 anzuschließen und zwar an das weitere Getriebeelement 4 des in Figur 2 linken Gelenks 1 und/oder an das Getrieberad 2 des in Figur 2 rechten Gelenks 1.

Der oben erwähnte Innenkanal 81 wird in dieser Ausführungsform des Gelenks 1 zur Ausbildung des invertierten Schneckengetriebes G2 nicht benötigt. Dies eröffnet die Möglichkeit, andere Bauteile, wie Leitungen, oder, wie beispielhaft in Figur 2 angedeutet, eine weitere Antriebswelle 51 beispielsweise für ein entferntes Gelenk 1 geschützt durch das Hohlprofil 8 zu führen, ohne dass die weitere Antriebswelle 51 ein Drehmoment auf das Gelenk 1 überträgt.

In Figuren 4A-4B ist jeweils eine Ansicht einer weiteren Ausführungsform des Gelenks 1 dargestellt, indem hier das Getriebe G als Lineargetriebe G3 ausgebildet ist. Zur Ausbildung des Lineargetriebes G3 sind das Getrieberad 2 als Stirnrad 28 und das weitere Getriebeelement 4 als Zahnstangenelement 43 ausgebildet. Das Zahnstangenelement 43 ist in Einbaulage in einer zweiten Aufnahmenut 85 des Multifunktionsprofils 8 festgelegt angeordnet. Damit wird das Multifunktionsprofil 8 in einer weiteren Einsatzmöglichkeit zum Linearbauteil des Lineargetriebes G3. Ferner fungiert das Multifunktionsprofil 8 als Wirkachse w.

Die zweite Aufnahmenut 85 ist zum Gewindeeingriff von Zahnstangenelement 43 und Stirnrad 28 in Einbaulage zu dem Getrieberad 2 hin geöffnet ausgebildet. Das Zahnstangenelement 43 ist verdrehfest und verschiebungsfest an dem Hohlprofil gelagert. Es greift in Einbaulage über einen dem Hinterschnitt angepassten Fuß 44 in die erste Aufnahmenut 82 ein. Ferner sind beidseitig des Zahnstangenelements 43 Klemmelemente 65 vorgesehen, die in einem Klemmsitz auf dem Hohlprofil 8 angeordnet sind und an denen das Zahnstangenelement 43 axial stirnseitig an Klemmelementen 65 anliegt. Damit wird das Zahnstangenelement 43 axial verschiebungsfest in der Aufnahmenut 84 gehalten.

Wie Figur 2 entnehmbar, weisen über das Multifunktionsprofil 8 gebrachten Klemmelemente 65 jeweils zwei koaxiale Hülsen, also eine radial innere Hülse 651 und eine radial äußere Hülse 652, auf, die über einander zugewandte konische Schraubgewinde in Gewindeeingriff stehen. Wenn, wie beim Schneckengetriebe G1, das Multifunktionsprofil 8 fest zum Gehäuse 3 gehalten werden soll, wird zur Montage mit fortschreitender Verschraubung die innere Hülse 651 über die äußere Hülse 652 bis zum Reibschluss gegen das Multifunktionsprofil gepresst. Ist wie beim invertierten Getriebe G2 eine Drehlagerung oder beim Lineargetriebe G3 eine lineare Verschieblichkeit des Multifunktionsprofils 8 notwendig, so können die Hülsen 651;652 in sich gegen einen Anschlag vorzugsweise unter Selbsthemmung verschraubt werden. Wie Figur 2 entnehmbar, kann dieser Anschlag durch einen umfänglichen Klemmring 71 mit radialen Vorsprüngen 72 realisiert werden, radial nach innen in das Multifunktionsprofil 8 verschiebungs- und verdrehfest eingreifen.

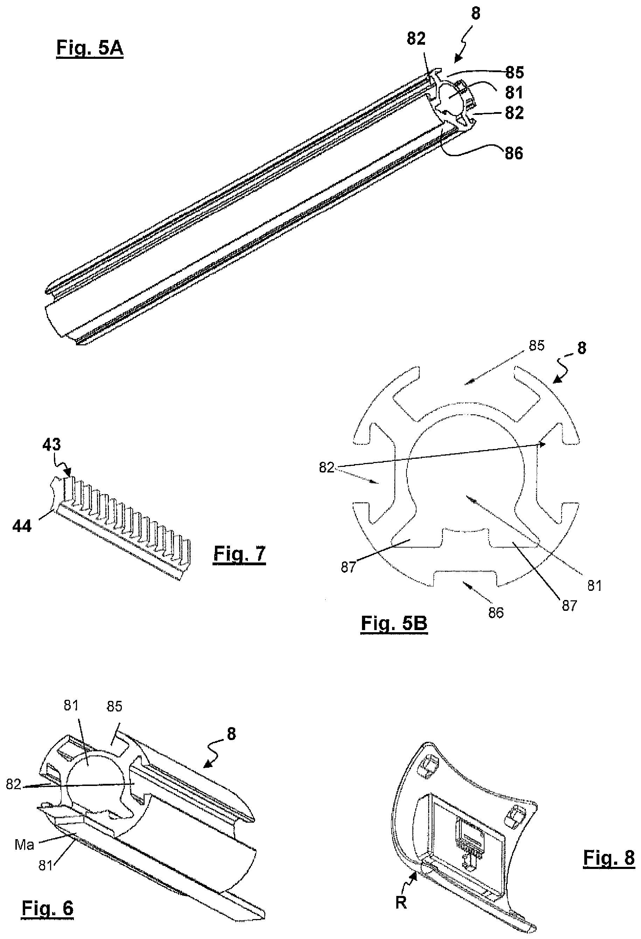

Figuren 5A und 5B zeigen das Multifunktionsprofil 8 in einer perspektivischen Darstellung bzw. in einer Querschnittsdarstellung. Das Multifunktionsprofil 8 wie auch seine zuvor beschriebenen Abschnitte 83;84 sind jeweils einstückig ausgebildet. Sie können aus einer vorzugsweise stranggepresster Profilstange auf die jeweils erforderliche Länge abgelängt werden. Mit Multifunktionsprofil ist allein eine Stange mit einer bestimmten Querschnittsprofilausbildung gemeint. Der Begriff Multifunktionsprofil umfasst nicht eventuelle darauf angeordnete Vorrichtungen oder Bauteile.

Den Figuren 5A und 5B sind die bereits beschriebene Anordnung und die Ausbildung der Aufnahmenuten deutlich entnehmbar. Figur 7 zeigt allein das Zahnstangenelement 43 mit seinem dem Hinterschnitt der ihm zugeordneten zweiten Aufnahmenut 85 angepassten Fuß 44. Gemäß Figur 6 ist in der dritten Aufnahmenut 86 zur Messung eines Verfahrweges des Zahnstangenelementes 43 ein lineares Messelement, hier in Form eines Magnetstreifens Ma, angeordnet. Eine entsprechende Sensorik R, eine Vorrichtung zur Aufnahme und Verarbeitung eines Wegmessungssignals, das durch die Änderung des Magnetfeldes des Magnetstreifens Ma generiert wird, ist in Figur 8 dargestellt. Es weist eine halbschalenartige Form auf und wird bezüglich der Wirkachse w mittig an dem Aufnahmeteil 31 festgelegt.

In den Figuren 9-12 sind unterschiedliche Ausbildungsformen des Manipulators M gezeigt, wobei hier bis zu sechs Gelenke 1 funktionswirksam miteinander zu dem Manipulator M verbunden sind. Dies sind beispielhafte Möglichkeiten, die Gelenke 1 miteinander zu kombinieren. Der Manipulator M kann insbesondere ein Gelenkarmroboter sein. Idealerweise ist der Manipulator M als 6-Achs-Manipulator M ausgebildet.

In den Figuren 6-12 sind bis zu fünf Gelenke 1 koaxial zu einer gemeinsamen Getriebeachse G und parallel beabstandet angeordnet. Sie werden über eine Verbindungsvorrichtung 9 parallel beabstandet zueinander gehalten. Gemäß Figur 9 ist eine Gruppe mit drei Gelenken 1 auf einer gemeinsamen Getriebedrehachse G angeordnet, wobei das in Figur 9 linke Gelenke 1 ein Schneckengetriebe G1 und die beiden anderen Gelenke 1 jeweils ein Lineargetriebe G3 aufweisen. Durch das Gelenk 1 mit dem Schneckengetriebe G1 wird ein Drehmoment in das Getrieberad 2 des zu ihm benachbarten Gelenks 1 eingekoppelt. Zwischen den beiden anderen Gelenken 1 mit dem Lineargetriebe G3 ist zur Übertragung eines Drehmoments zwischen den beiden Gelenken 1 ein Multifunktionsprofil 8 angeordnet. Das Multifunktionsprofil 8 ist endseitig jeweils über eine Anschlusslagerung 53 verdreh- und verschiebungsfest mit den Getrieberädern 2 der beiden Gelenke 1 verbunden. Somit dient das Multifunktionsprofil 8 in diesem Fall als Drehmomentübertragungswelle zwischen den beiden Gelenken 1 mit dem Lineargetriebe G3.

Die Figuren 10A bis 10B zeigen jeweils eine Ansicht einer weiteren Ausführungsform des Manipulators M mit drei bezüglich der Wirkachse w hintereinander angeordneten Gelenken 1, die jeweils Schneckengetriebe G1 aufweisen, wobei die Schneckengetriebe G1 der Gelenke 1 baugleich sind. Die Gelenke 1 sind über einzelne zweite Abschnitte 84 eines Multifunktionsprofil 8 voneinander beabstandet gehalten. Ähnlich wie in der Ausführungsform gemäß Figur 1, ist durch diese zweiten Abschnitte 84 eine gemeinsame Antriebswelle 51 geführt, die endseitig in einen ersten Abschnitt 84 des Multifunktionsprofil 8 endet und die Schneckengetriebe G1 aller drei Gelenke 1 antreibt.

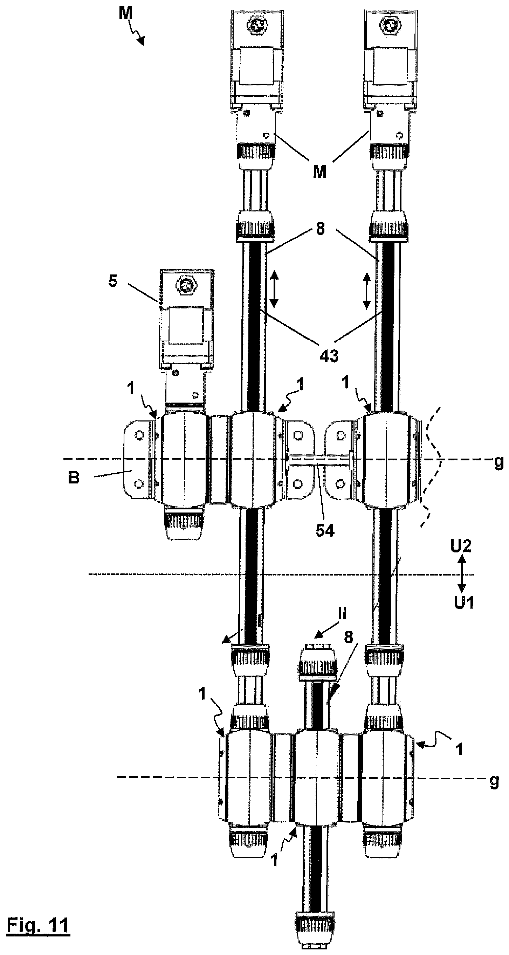

In der Ausbildungsform des Manipulators M gemäß Figur 11 können die Gelenke 1 von ihrem Funktionszusammenhang her in eine erste Gruppe U1 und eine zweite Gruppe U2 eingeteilt werden, wobei die in Figur 11 oben angeordnete zweite Gruppe U2 bereits anhand Figur 9 erläutert wurde. Die zweite Gruppe U2 ist an einer Basis B festgelegt. Die beiden äußeren Gelenke 1 der ersten Gruppe U1 sind jeweils über ein Multifunktionsprofil 1 mit eingelegtem Zahnstangenelement 43 mit einem in Figur 11 oben angeordneten Motor 5 verbunden, dessen Drehmoment über eine durch das jeweilige Multifunktionsprofil 1 durchlaufende hier nicht sichtbare Antriebswelle 51 auf das jeweils zugeordnet äußere Gelenk 1 übertragen wird. Durch die beiden Gelenke 1 mit Lineargetriebe G3 wird das jeweils zugeordnete Multifunktionsprofil 8 mit eingelegtem Zahnstangenelement 43 linear verfahren. Da die Getrieberäder 2 dieser beiden Gelenke 1 hier über einen Antriebswellenabschnitt 54 verdrehfest miteinander verbunden sind, werden die beiden zugeordneten Multifunktionsprofile 1 synchron zueinander verfahren. Das in der ersten Gruppe U1 mittig angeordnete Gelenk 1 ist ebenfalls mit einem hier nicht sichtbaren Lineargetriebe G3 ausgestattet, durch welches das durch dieses Gelenke 1 durchlaufende Multifunktionsprofil 8 linear verfahren wird.

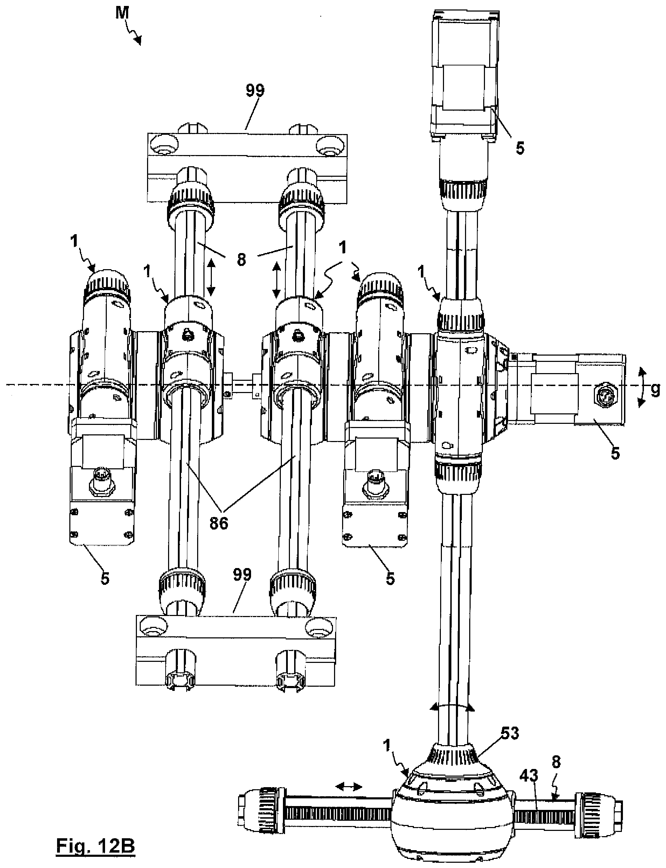

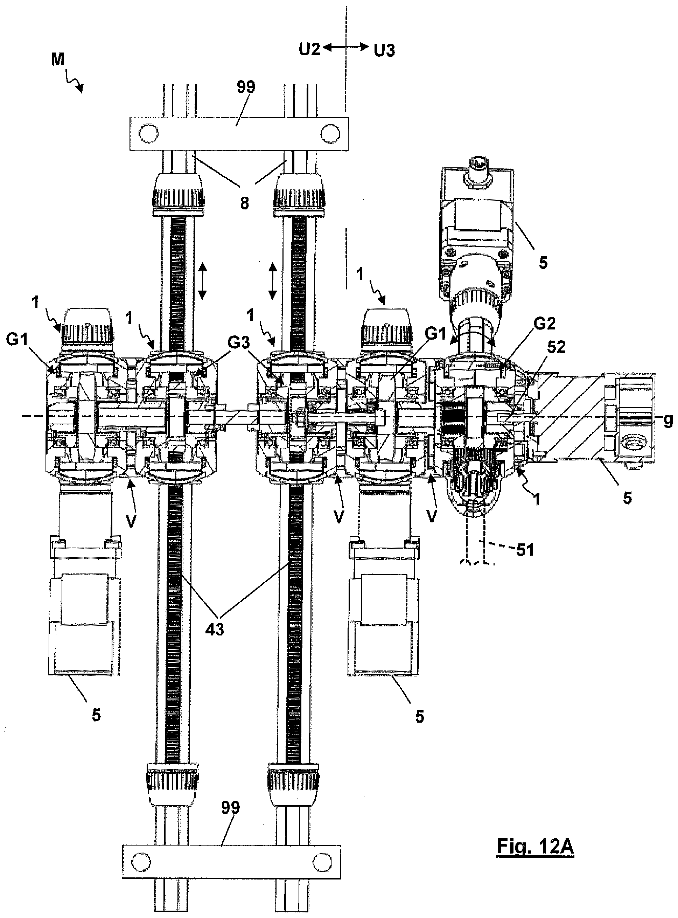

In den Figuren 12A und 12B wird eine Schnittansicht bzw. eine zur Basis B Unteransicht einer weiteren Ausführungsform des Manipulators M, hier mit fünf bzw. sechs Gelenken 1 gezeigt. Bei der Unteransicht gemäß Figur 12 B sind die in die Multifunktionsprofile 8 eingelegten Zahnstangenelemente 43 verdeckt, da sie zu dem Getrieberad 2 des jeweils zugeordneten Gelenks 1 hinweisen. Es können die eingesetzten Gelenke 1 ebenfalls in zwei Gruppen U2;U3 gegliedert werden. Die Gelenke 1 beider Gruppen U2;U3 sind koaxial auf einer Getriebedrehachse g angeordnet.

Die hier linke Gruppe ist die bereits erwähnte zweite Gruppe U2. Da die jeweils an einem Hohlprofil 8 angebrachten Zahnstangenelemente 43 parallel zueinander gehalten synchron linear verfahren werden, können sie, wie in Figur 12 vorgesehen, zu ihrer Stabilisierung über Querstege 99 fest miteinander verbunden sein.

Bei dem in Figur 12 rechten Gelenk 1 der in Figur 12 rechten Gruppe U3 verbindet das Multifunktionsprofil 8 den hier oben angeordneten zugeordneten Motor 5 mit einem weiteren einzelnen Gelenk 1. Hierbei ist, wie in Figur 12A durch gestrichelte Linien angedeutet, vorgesehen, dass die von dem Motor 5 angetriebene Antriebswelle 51 in einem Multifunktionsprofil 8 durch das in Figur 12A rechte Gelenk 1 durchgeleitet. Es durchläuft die an dem Gelenk 1 vorgesehene Anschlusslagerung 53, um Drehmoment übertragungswirksam mit dem Getrieberad des unten angeordneten einzelnen Gelenks 1 verbunden zu werden. Dieses einzelne Gelenk 1 weist ein hier verdecktes Lineargetriebe (G3) auf, auf welches das angeschlossene Multifunktionsprofil 8 mit dem Zahnstangenelement 43 indirekt hinweist.

Das in Figur 12A rechte Gelenk 1 der dritten Gruppe U3 weist ein invertiertes Schneckengetriebe G3 auf. Wie im Zusammenhang mit Figuren 2 und 3 erläutert, ist bei einem invertierten Schneckengetriebe G2 das weitere Getriebeelement 4 abtriebsseitig angeordnet, wird von dem hier antriebseitigen Getrieberad 2 angetrieben und sitzt hier verdrehfest auf dem Multifunktionsprofil 8 auf, wodurch auch dieses angetrieben wird. Das Multifunktionsprofil 8 dient somit zugleich als Welle. Das Multifunktionsprofil 8 nimmt das über das invertierte Schneckengetriebe G2 übertragene Drehmoment des hier rechten Motors 5 auf und koppelt es über die Anschlusslagerung 53 in das Gehäuse 3 des unten angeordneten einzelnen Gelenks 1 ein, wodurch das Gelenk 1 um dieses Multifunktionsprofil 8 verdreht wird. Das in Figur 12 linke Gelenk 1 weist ein durch den nach unten weisenden Motor 5 angetriebenes Schneckengetriebe G1. Dieses koppelt das Drehmoment in das Gehäuse 3 des rechten Gelenk 1 der dritten Gruppe U3 ein, so dass hierdurch das rechte Gelenk 1 mit den angeschlossenen Motoren 5 um die Getriebedrehachse g verdreht wird.

### Bezugszeichenliste

- 1: Gelenk
- 2: Getrieberad
- 21: Stirnseite
- 22: Adapter
- 23: Seite
- 24: Öffnung
- 25: Innengewinde
- 26: Schneckenrad
- 27: Außengewinde
- 28: Stirnrad
- 29: Außenverzahnung
- 3: Gehäuse
- 31: Aufnahmeteil
- 4: weiteres Getriebeelement
- 41: Schnecke
- 42: Stirnverzahnung
- 43: Zahnstangenelement
- 44: Fuß
- 45: Ankerelement
- 5: Motor
- 51: Antriebswelle
- 52: Motorwelle
- 53: Anschlusslagerung
- 54: Antriebswellenabschnitt
- 65: Klemmelement
- 651: innere Hülse
- 652: äußere Hülse
- 67: Justiergerät
- 671: Stellvorrichtung
- 7: Lager
- 71: Klemmring
- 72: Vorsprung
- 73: vorderes Lager
- 74: hinteres Lager
- 8: Hohlprofil
- 81: Innenkanal
- 82: erste Aufnahmenut
- 83: erster Abschnitt
- 84: zweiter Abschnitt
- 85: zweite Aufnahmenut
- 86: dritte Aufnahmenut
- 87: Längskammer
- 9: Verbindungsvorrichtung
- 99: Quersteg
- a: Abstandsrichtung
- g: Getriebedrehachse
- w: Wirkachse
- B: Basis
- G: Getriebe
- G1: Schneckengetriebe
- G2: invertiertes Schneckengetriebe
- G3: Lineargetriebe
- M: Manipulator
- Ma: Magnetstreifen
- R: Sensorik
- S: schiefe Ebene
- U1: erste Gruppe
- U2: zweite Gruppe
- U3: dritte Gruppe
- V: Verbindungsvorrichtung

## Patentansprüche

1. Gelenk (1) mit einem Multifunktionsprofil (8 für einen Manipulator (M) ), wobei das Multifunktionsprofil (8) als tragendes Verbindungselement zwischen einem Motor (5) des Manipulators (M) und dem Gelenk (1) ausgebildet ist und einen Innenkanal (81), eine in der Grundform kreisrunde Außenkontur und seitliche Aufnahmenuten zur Festlegung des Multifunktionsprofils (8) an einem Gehäuse (3) des Gelenks (1) und/oder zur Festlegung von Zusatzbauteilen aufweist, wobei die Aufnahmenuten quer zur Längsrichtung des Multifunktionsprofils (8) nach außen hin geöffnet ausgebildet sind, wobei das Gehäuse (3) in die Aufnahmenuten eingreifende Vorsprünge zum Festlegen des Multifunktionsprofils (8) am Gehäuse (3) aufweist, wobei das Gelenk (1) ein Schneckengetriebe (G) aufweist, das ein um eine Getriebedrehachse (g) drehbares Getrieberad (2) und eine Schnecke (41) umfasst, die in einer Wirkverbindung mit dem Getrieberad (2) steht und eine zur Getriebedrehachse (g) beabstandete Wirkachse (w) aufweist, über welche die Schnecke (41) an einem Aufnahmeteil (31) des Gehäuses (3) gelagert ist, wobei die Wirkachse (w) durch eine von dem Motor (5) direkt angetriebene Antriebswelle (51) der Schnecke (41) gebildet ist, wobei die Antriebswelle (51) axial beidseitig der Schnecke (41) jeweils über ein Lager (7) an dem Aufnahmeteil (31) drehbar gelagert ist und in dem Innenkanal (81) des Multifunktionsprofils (8) geführt angeordnet ist, wobei das Multifunktionsprofil (8) zwei Abschnitte (83, 84) aufweist, die über die axiale Erstreckung der Schnecke und der beiden Lager (7) axial voneinander beabstandet sind, wobei die Abschnitte (83, 84) jeweils mit einem der Schnecke (41) zugewandten Ende stirnseitig an dem zugeordneten Lager (7) angreifen, und jeweils mit einem der Schnecke (41) abgewandten Ende an dem Aufnahmeteil (31) widergelagert sind, wobei der erste Abschnitt (83) mit seinem der Schnecke (41) abgewandten Ende kraftübertragungswirksam an einem Justiergerät (67) anliegt, zur bezüglich der Wirkachse (w) axialen Spieleinstellung der Wirkverbindung zwischen dem Getrieberad (2) und der Schnecke (41), wobei das Justiergerät (67) eine Stellvorrichtung (671) aufweist, zum Andrücken des ersten Abschnitts (83) axial in Richtung vom Justiergerät (67) zur Schnecke (41) hin gegen das zugeordnete Lager (7), um das Lager (7) zwecks Spieleinstellung gegen die Schnecke (41) anzudrücken.

2. Gelenk (1) mit einem Multifunktionsprofil (8) nach Anspruch 1, **dadurch gekennzeichnet, dass**die seitlichen Aufnahmenuten umfänglich zumindest im Wesentlichen gleich beabstandet angeordnet sind.

3. Gelenk (1) mit einem Multifunktionsprofil (8) nach einem der vorhergehenden Ansprüche, **dadurch gekennzeichnet , dass** die Aufnahmenuten hinterschnitten ausgebildet sind.

4. Gelenk (1) mit einem Multifunktionsprofil (8) nach einem der vorhergehenden Ansprüche, **dadurch gekennzeichnet, dass** der Innenkanal (81) einen im Wesentlichen kreisrunden Querschnitt aufweist.

5. Gelenk (1) mit einem Multifunktionsprofil (8) nach einem der vorhergehenden Ansprüche, **dadurch gekennzeichnet, dass** der Innenkanal (81) zumindest eine seitliche Längskammer (87) zur Aufnahme von Schmiermittel, zur Durchführung von Leitung und/oder zur Materialersparnis aufweist.

6. Gelenk (1) mit einem Multifunktionsprofil (8) nach einem der vorhergehenden Ansprüche, **dadurch gekennzeichnet, dass** das Multifunktionsprofil (8) einen entlang seiner Längserstreckung gleichbleibenden Querschnitt aufweist, und insbesondere ein abgelängter Teil einer stranggepressten Profilstange ist.

7. Manipulator umfassend ein Gelenk (1) einem Multifunktionsprofil (8) nach einem der vorstehenden Ansprüche, wobei mindestens ein weiteres Multifunktionsprofil vorgesehen ist, das als Welle ausgebildet ist, und wobei die beiden Multifunktionsprofile zumindest hinsichtlich ihrer Profilausbildung zumindest abschnittsweise baugleich sind.

## Claims

1. A joint (1) with a multi-function profile member (8) for a manipulator (M), wherein the multi-function profile member (8) is designed as a supporting connecting element between a motor (5) of the manipulator (M) and the joint (1) and has an internal passage (81), an external contour which is circular in its basic form and lateral receiving grooves for fixing the multi-function profile member (8) to a housing (3) of the joint (1) and/or for fixing additional components, wherein the receiving grooves are opened outwardly transversely relative to the longitudinal direction of the multi-function profile member (8), wherein the housing (3) has projections engaging in the receiving grooves for securing the multi-function profile member (8) to the housing (3), wherein the joint (1) has a worm transmission (G) comprising a gear wheel (2) rotatable about a transmission axis of rotation (g) and a worm (41) that is in operative connection with the gear wheel (2) and has an operative axis (w) spaced from the transmission axis of rotation (g), via which the worm (41) is mounted on a receiving portion (31) of the housing (3), wherein the operative axis (w) is formed by a drive shaft (51) of the worm (41) driven directly by the motor (5), wherein the drive shaft (51) is rotatably mounted axially on both sides of the worm (41) via a respective bearing (7) on the receiving portion (31) and is arranged guided in the internal passage (81) of the multi-function profile member (8), wherein the multi-function profile member (8) has two portions (83, 84) which are axially spaced apart from each other over the axial extension of the worm and of the two bearings (7), wherein the portions (83, 84) each engage with an end facing the worm (41) at the end face of the associated bearing (7) and are each counter-supported at the receiving portion (31) with an end facing away from the worm (41), wherein the first portion (83) with its end facing away from the worm (41) bears in a force-transmitting relationship against a setting unit (67) for adjusting the axial play of the operative connection between the gear wheel (2) and the worm (41) with respect to the operative axis (w), wherein the setting unit (67) has an adjusting device (671) for pressing the first section (83) axially in the direction from the setting unit (67) towards the worm (41) against the associated bearing (7) in order to press the bearing (7) against the worm (41) for the purpose of adjusting the play.

2. A joint (1) with a multi-function profile member (8) according to claim 1, **characterized in that** the lateral receiving grooves are arranged peripherally at least substantially equally spaced.

3. A joint (1) with a multi-function profile member (8) according to one of preceding claims, **characterized in that** the receiving grooves are respectively of an undercut configuration.

4. A joint (1) with a multi-function profile member (8) according to one of preceding claims, **characterized in that** the internal passage (81) is of a substantially circular cross-section.

5. A joint (1) with a multi-function profile member (8) according to one of preceding claims, **characterized in that** the internal passage (81) has at least one lateral longitudinal chamber (87) for receiving lubricant, for passing a line therethrough and/or for saving on material.

6. A joint (1) with a multi-function profile member (8) according to one of preceding claims, **characterized in that** the multi-function profile member (8) has a cross-section that remains constant along its longitudinal extension and the multi-function profile member (8) is in particular a cut to length part of an extruded profile bar.

7. A manipulator comprising a joint (1) with a multi-function profile member (8) according to one of preceding claims, wherein there is provided at least one further multi-function profile member which is in the form of a shaft and wherein the two multi-function profile members have the same structure at least portion-wise and at least in respect of their profile configuration.

## Revendications

1. Articulation (1) avec un profilé multifonctionnel (8) pour un manipulateur (M), le profil multifonctionnel (8) étant conçu comme élément de liaison porteur entre un moteur (5) du manipulateur (M) et l'articulation (1) et comportant un canal intérieur (81), un contour extérieur de forme circulaire dans sa forme de base et des rainures de réception latérales pour la fixation du profilé multifonctionnel (8) sur un boîtier (3) de l'articulation (1) et/ou pour la fixation de composants supplémentaires, les rainures de réception étant réalisées transversalement à la direction longitudinale du profilé multifonctionnel (8) sont ouvertes vers l'extérieur, le boîtier (3) présentant des saillies s'engageant dans les rainures de réception pour fixer le profilé multifonctionnel (8) sur le boîtier (3), l'articulation (1) comportant un engrenage à vis sans fin (G) qui comprend une roue dentée (2) pouvant tourner autour d'un axe de rotation (g) de l'engrenage (2) et une vis sans fin (41) qui est en liaison active avec la roue d'engrenage (2) et présente un axe d'action (w) espacé de l'axe de rotation (g) de l'engrenage, par l'intermédiaire duquel la vis sans fin (41) est montée sur une partie de réception (31) du boîtier (3), l'axe d'action (w) étant formé par un arbre d'entraînement (51) de la vis sans fin (41) entraîné directement par le moteur (5), l'arbre d'entraînement (51) étant monté axialement de manière rotative de part et d'autre de la vis sans fin (41) par l'intermédiaire d'un palier (7) sur la partie de réception (31) et est guidé dans le canal intérieur (81) du profilé multifonctionnel (8), le profilé multifonctionnel (8) comportant deux sections (83, 84) qui sont espacées axialement l'une de l'autre sur l'extension axiale de la vis sans fin et des deux paliers (7), les sections (83, 84) s'engageant chacune avec une extrémité tournée vers la vis sans fin (41) frontalement sur le palier associé (7) et s'appuyant chacune avec une extrémité opposée à la vis sans fin (41) sur la partie de réception (31), la première partie (83) s'appuyant avec son extrémité opposée à la vis sans fin (41) de manière à transmettre la force sur un dispositif de réglage (67) pour le réglage du jeu axial par rapport à l'axe d'action (w) de la liaison active entre la roue dentée (2) (2) et la vis sans fin (41), le dispositif de réglage (67) comportant un actionneur (671) pour presser la première partie (83) axialement dans la direction allant du dispositif de réglage (67) vers la vis sans fin (41) contre le palier associé (7), afin de presser le palier (7) contre la vis sans fin (41) pour régler le jeu.

2. Articulation (1) avec un profilé multifonctionnel (8) selon la revendication 1, **caractérisée en ce que** les rainures de logement latérales sont disposées sur le pourtour à au moins un espacement sensiblement identique.

3. Articulation (1) avec un profilé multifonctionnel (8) selon l'une quelconque des revendications précédentes, **caractérisée en ce que** les rainures de logement sont réalisées en contre-dépouille.

4. Articulation (1) avec un profilé multifonctionnel (8) selon l'une quelconque des revendications précédentes, **caractérisée en ce que** le canal intérieur (81) présente une section transversale essentiellement circulaire.

5. Articulation (1) avec un profilé multifonctionnel (8) selon l'une quelconque des revendications précédentes, **caractérisée en ce que** le canal intérieur (81) présente au moins une chambre longitudinale latérale (87) pour recevoir du lubrifiant, pour faire passer une conduite et/ou pour économiser de la matière.

6. Articulation (1) avec un profilé multifonctionnel (8) selon l'une quelconque des revendications précédentes, **caractérisée en ce que** le profilé multifonctionnel (8) présente une section transversale constante le long de son extension longitudinale et est en particulier une partie coupée à longueur d'une barre profilée extrudée.

7. Manipulateur comprenant une articulation (1) avec un profilé multifonctionnel (8) selon l'une quelconque des revendications précédentes, au moins un autre profilé multifonctionnel étant prévu, qui est réalisé sous forme d'arbre, et les deux profilés multifonctionnels étant identiques au moins en partie en ce qui concerne leur configuration de profil.
